Europäisches Patentamt

European Patent Office

Office européen des brevets

(19)

(11) Publication number: **0 007 325**
**B1**

(12) **EUROPEAN PATENT SPECIFICATION**

(45) Date of publication of patent specification: **02.06.82**

(51) Int. Cl.³: **C 02 F 1/46, C 02 F 1/52, C 02 F 1/66**

(21) Application number: **78300083.9**

(22) Date of filing: **27.06.78**

(54) **Process and assembly for removing a dissolved or suspended contaminant from a polar liquid as a solid substance.**

(43) Date of publication of application:
**06.02.80 Bulletin 80/3**

(45) Publication of the grant of the patent:
**02.06.82 Bulletin 82/22**

(84) Designated Contracting States:
**BE CH DE FR LU NL SE**

(56) References cited:
**DE - A - 2 042 017**
**DE - A - 2 136 035**
**FR - A - 2 156 636**
**NL - A - 73 05238**
**US - A - 3 975 257**

(73) Proprietor: **Lindman, William Edward**
**10189 Oriole Avenue**
**Fountain Valley California 92708 (US)**

(73) Proprietor: **Alexander, John A.**
**Box 288**
**Cayucos California 93430 (US)**

(72) Inventor: **Lindman, William Edward**
**10189 Oriole Avenue**
**Fountain Valley California 92708 (US)**
Inventor: **Alexander, John A.**
**Box 288**
**Cayucos California 93430 (US)**

(74) Representative: **Gilmour, David Cedric Franklyn**
**et al,**
**POTTS, KERR & CO. 15 Hamilton Square**
**Birkenhead Merseyside L41 6BR (GB)**

Process and assembly for removing a dissolved or suspended contaminant
from a polar liquid as a solid substance

The demand for water purification does not arise solely from the need for treating sewage or noxious industrial waste, nor is it necessarily directed merely toward obtaining potable water for humans and animals. Recent environment control regulations have restrained the discard of water such as that which through ordinary industrial use has appreciably increased its content of dissolved solids (which are generally inorganic or mineral compounds) as well as inhibiting discard of such liquid which has accumulated or concentrated particular toxic components.

For example, the body of water which is circulated as a coolant in many industrial or chemical plants, is then returned to a heat exchanger where part of it is evaporated in order to reduce the temperature of the remainder, which remainder is then recirculated. This evaporation step itself would increase the concentration of contained solids merely by reducing the volume of liquid. However, in its travel, the liquid picks up deposits or sediment from the plumbing system, and in addition, in order to minimize corrosion, foaming and scale formation (such as resulting from "hard water"), various inhibitory additives are mixed into the circulating stream. These obviously contribute further to the dissolved solid content and after the latter has built up to the maximum allowable for continued circulation, it becomes necessary to discard part of the fluid mixture and replace it with fresh water (and new additives).

However, this heavily loaded discard has now become an illegal pollutant when released into flowing streams or ocean. The problem is to purify it before release; and hopefully if such purification process is sufficiently successful or complete, the water may be reused indefinitely and need not be released at all.

A particular contaminant in such cooling water system is chromium which is a component of many anti-corrosive or biocide additives. Thus hexavalant chromium is a toxic substance not releasable to the environment. Other toxic components of common cooling water additives are cyanides and phosphates, which must be detoxified before release.

Purification of polluted water for purposes of reuse, whether starting with agriculture/municipal sewage or with industrial waste, has been concerned primarily with recovery of potable water, only after the initial separation and disposal of solid components in an inert state, this being considered a necessary and preliminary step for any subsequent treatment. The solids may have then been utilized to a small extent as plant support base or land fill, but such product is not a primary purpose for effecting the separation and for the most part the undifferentiated sludge is simply separated in bulk and discarded in the manner most convenient. Purification of the aqueous phase then takes place (if at all) as a successive, rather than concurrent, procedure. However, it will be realized that the aqueous run-off from many and probably most water-treating procedures (even if only involving flushing) carries a quantity of solid and potentially-solid ingredients having tangible economic value if such could only be recovered in concentrated form without great expense.

Further, treatment of such masses of contaminated water in the past has been primarily on a batch basis, large bodies of water being treated with acid or other reagent in a "settling basin" or even in successive chambers and then allowed to stand for a prolonged period until spot checks show that the supernatant was clarified. In brief, it has not been realized that by careful regulation of the parameters of a flowing stream containing charged particles, separation/purification of an impure aqueous medium could be effected in a fraction of the previous time, and also that the controls could be shifted so as to maximize the withdrawal of specific contaminants which it was desired to concentrate in the solid state. Some substances it may be desired to destroy—as microorganisms, herbicides, pesticides and inorganic toxins—or to recover, such as nitrogeneous compounds or precious metals. Accordingly, the control parameters of such flow treatment can now be accommodated to a particular feed stock and with a view as to how it is wished to dispose of specific contaminants.

It has long been known, for example from DE A 2,042,017 to purify waste water by oxidizing it in the joint presence of iron plus sulfur dioxide or an oxidizing acid. The impurity is then removed by flocculating the iron in alkaline media. However, to the extent that this process has been used, bulk solids necessarily were first removed as by filtration, and as to the remaining filtrate, past treatment does not remove dissolved impurities (such as inorganic salts typified by NaCl) or substances incapable of oxidation (such as metal particles): each of these classes may include such undesirable toxins as arsenic, mercury, cadmium, lead, selenium or boron.

It has now been found that this dual oxidation/precipitation step can be incorporated into a composite treating process whereby essentially any flowable, polar liquid medium containing (finely fractionated) waste/refuse, as well as soluble salts and non-oxidizable impurities, can have all non-gaseous impurities removed as solids, leaving a sterile, pure, oxygen-containing liquid (e.g. potable water, which is also capable of supporting fish and other marine life). The precipitated material is also sterile and if desired can be further fractionated to recover substances of economic value, such as previous metals or fertilizer-enriched sludge.

According to the present invention there is provided a process for removing from a polar liquid as a solid substance, a dissolved or suspended contaminant, which contaminant is capable of solid

2

existence at ambient operating temperature and pressure by addition of a heavy metal, which metal is capable of forming a flocculant precipitate in alkaline media and which metal is capable of being oxidized in acidic media, making such liquid alkaline and separating the supernatant liquid from the precipitate, characterised in that said process comprises

(a) dispersing in said liquid a minimum of 0.1% w. random-moving particulate matter, which may either be added or be formed by comminuting of said contaminant when the latter is initially present in bulk, which dispersed particles thereof have a density of 1.05 to 2.0 and a size of 30 to 225 microns with free surface energy of $100 \times 10^{-7}$ to $500 \times 10^{-7}$ joules/cm$^2$, and also reducing any additional solid matter present to such particle size.

(b) providing an oxidation medium for such of the contaminant and added particles as may be capable of oxidation, by making such liquid acidic, intimately dispersing gaseous oxygen therein, and providing a supply of a heavy metal, which metal is characterised by the capacity of subsequently forming a flocculant precipitate in alkaline media, and by the capacity of being oxidized in situ.

(c) moving the particles at least in part by flowing the liquid and its contents through electrically-insulated and flow-connected reaction vessels in intimate mixture with gaseous oxygen.

(d) making said liquid alkaline, subsequently ceasing agitation and electrically grounding the alkaline liquid, thus yielding an oxygen-containing supernatant pure liquid and a precipitate.

Also in accordance with the present invention there is provided an assembly for purification of contaminated liquid by successive acidic and alkaline treatment of said liquid in the presence of an oxidising agent dispersed therein and in the presence of a heavy metal which is capable of forming a flocculant precipitate in alkaline media and of being oxidized in acidic media, said assembly including liquid flow control means, characterised in the following sequentially connected units:

(a) liquid container means including associated means for selectively macerating solid components of a thus-contaminated liquid, and gas delivery/aeration means for passing gas into intimate admixture with said contaminated liquid and macerated components,

(b) acidic treatment means, flow connected to said container means, and including means for regulation of pH by selective introduction of acidic and gaseous oxidizing reagents to the contaminated liquid,

(c) container and reactant means, flow connected to said last treatment means, and comprising a source of soluble heavy metal ions adapted to mingle with the liquid flow stream, and means for subsequently aerating the liquid flow by passing gaseous oxygen therethrough;

(d) neutralization means, flow connected to said last aerating means for introducing alkaline reagent into the liquid flow, and a plurality of successively distal means for intimately mixing gaseous oxygen into the alkaline flow stream in amount adapted to restrain precipitation of contaminants by agitation thereof;

(e) means for flocculating separable contaminant components of the alkaline flow stream, substantially concurrent with electrical grounding of said stream, and switch means for electrically grounding said alkaline flow stream, each of said units starting with (b) being electrically insulated from ground support, and said flocculating means (e) being electrically insulated from the preceding flow connected unit.

In brief, in a primary reaction vessel or multi-unit apparatus, all of which is electrically insulated, there is provided (in the absence of any externally imposed electric current) a self-generated galvanic cell formed by "soluble" or free electrons resulting from acidic oxidation of a contained heavy metal capable of alkaline flocculation, such as iron and/or aluminum, as well as by free electrons produced by disassociation of water (or other polar media) by introduction of sulfur dioxide. A minimum suspension of minute particles (as hereafter defined) is also deliberately provided, either by addition or by fractionation of bulk solids initially present. Such dispersed particles (preferably constituting all of the solid material present except for the electron-producing metal) inherently possess random movement in the liquid medium (which movement is the Van der Waals effect resulting from an internally generated spin of an unsymmetrical molecule). In conjunction with the moving electrons, this results in a distribution of charge to other particles and adhesion between charged microparticles and minute gas bubbles, which ultimately results in complete oxidation of all oxidizable material present. This necessary cross-distribution or random mixing of electrons with both charged and uncharged particles in the insulated cell may be accentuated by bubbling gaseous oxygen (air) and/or sulfur dioxide through the liquid, as well as by agitation of the body of liquid as by means of pump or stirrer. Electrical insulation of each reaction vessel is necessary in order to keep such charge (maintained by pH regulation) from grounding through a conductive reaction vessel or flow conduit.

Under the step-wise oxidizing conditions and imposed galvanic flow pattern, metallic ions agglutinate with particulate matter and are replaced in the aqueous medium by other cations, i.e. hydrogen ions, at the same time maintaining the selected concentration of acidity. Among other reactions, part of such hydrogen ions couple with available nitrogen to form $NH_4^+$. Such ammonium ion then couples with ferrous ion to form (green) ferrous ammonium ion.

Successive chemical reaction steps can be effected by batch procedure, as long as sufficient agitation is provided to keep the ingredients from settling out prior to the ultimate and desired flocculation. However, it is usually desirable to effect the process as a continuous flow, particularly

3

O 007 325

when a continuing supply of feed stock is available, as from a municipal sewage collection stream or similar industrial/agriculture waste flow. Accordingly both the liquid medium and an associated gas stream are moved to and through successive treating zones or chambers. The body of reactant gas (which should include oxygen) is channelled to contactingly overlie or flow through the liquid medium as the case may be.

Accordingly, by relating the size and shape of the reaction vessels and connecting conduits, a series of dimensionless parameters has been obtained for both the liquid and gas streams, by use of which controlled flow rates the material being treated is moved in a substantially continuous but step-wise pattern of reaction which prevents phase-separation while enabling or promoting electron distribution until complete oxidation is effected. The final chemical-treatment step is then accomplished by alkylation of the medium with avoidance of potential phase-separation during a preliminary digestion period followed by electrical grounding of the medium concurrent with joint precipitation/flocculation of the metallic ions and the coagulated impurities. In addition, such grounding of the medium, which may be effectuated by grounding the insulated reaction vessel containing it, produces a noticeably more firmly-packed precipitate than would otherwise result.

When the composite impurity is composed of both (a) cellulosic material (e.g., food residues, waste paper or cartons, etc.) and (b) suspended minerals or metals and/or soluble salts (e.g. brackish water) the final alkaline flocculation tends to segregate "a" and "b" into successive layers with the "b" material being precipitated first or underneath the "a" material. The procedure can thus be used to concentrate small quantities of precious metals from slurries and the like; in the event that "a" material is not already mixed with it, the minimum charged particulate matter is added as described.

Separation of all potentially-solid components from such a flowing galvanic cell, by grounding and cessation of movement or agitation, in addition to removing in the flocculate such impurities as might previously be expected from the chemical reaction alone, now also draws soluble salts such as sodium chloride out of solution as well as precipitating suspended non-oxidizable particles. The only requirements for participating substances are that the liquid be a polar liquid, and the solid or potentially-solid substance be capable of the Van der Waals effect. In addition to water, other polar liquids are alcohols, acids, bases and other substances which ionize or conduct an electric current. The dispersed particulate matter should constitute a minimum of 0.1% w. and have a particle density of 1.05 to 2.0 and a size of 30 to 225 microns with free surface energy of $100 \times 10^{-7}$ to $500 \times 10^{-7}$ joules/cm$^2$. In this connection it will be realized that the smaller the particle size, the greater the relative surface area and the greater the forces of surface attraction (relative to weight), so that the relative influence of gravity on the particle is correspondingly diminished. Thus the specific surface energy of a given solid can multiply more than 8000 times in going from approximately 5.08 cm diameter to one micron. Its unit surface energy at the same time increases more than 600%. Accordingly, the greater the fractionation (maceration) of the bulk material into small particles the greater effect the increased surface energy will have on reaction and flow properties. This factor is the same of course whether the material constitutes matter which (in addition to its carrier function) is to be oxidized, or whether it is particulate matter added merely for its function of carrying a charge in the flowing galvanic stream.

However it will be apparent also that such fractionated particles, possessing Brownian movement and increased unit surface energy, have a strong tendency to coalesce if brought together; that is, they become a non-free-flowing mass rather than acting as independent discrete particles. Such potential coagulation is prevented by (1) pump action, mechanical agitation, and passage of gas currents through the liquid, each applied at a particular critical location, and (2) by moving the galvanic flow stream at a varied and deliberate rate in accordance with Reynolds Numbers and other dimensionless parameters selected to prevent phase separation. Thus when later such suspended particles (galvanically charged) are finally directed to settle out, in cooperation with a flocculating ion, cancellation or grounding of the galvanic charge tremendously reinforces this final (desired) phase separation. Thus one particularly notable and totally unexpected result from this flowing galvanic cell and from the Van der Waals surface effect exhibited by the particulate dispersion, is that by the present process soluble salts (in particular NaCl or other alkali metal halides) present in the liquid, also leave their state of solution and enter into the separating flocculate. Such desalinification may be explained in part by continuation of the suspended flocculate in an oxygen-saturated medium until the reduced flocculating ion (ferrous) is itself completely oxidized (to ferric ion).

To restate the present process: flowable contaminants of a liquid may be either or both soluble and solid (the latter being held suspended by a moving stream). They may or may not be in a condition of lower valance or be subject to having toxicity destroyed by oxidation, but in any event the flow is exposed to a strong oxidizing treatment (initially in a strongly acidic environment which is then shifted to a highly alkaline environment) in a moving ionic exchange medium which characteristic is furnished by a combination of Van der Waals surface action of particulate matter and by galvanic charge imposed on such particles; one result of this is that gas bubbles (of air and sulfur dioxide) surface-adhere to and react with oxidizable particles and are replenished by inert particles (carriers) transferring similar bubbles to them. The flow is moved through successive treating units at rates of flow determined by dimensionless numbers such as Reynolds, Schmidt Numbers, Peclet Numbers, Lehman Reaction

4

Numbers, Weber Numbers, Stanten Numbers and certain bed contact numbers. After alkaline treatment and continued gaseous oxidation, the non-liquid components are flocculated and separated as a sterile solid sludge. The latter may then be digested and/or fractionated to concentrate and retrieve particular ingredients of value, by use of known methods.

Whereas in the past it was only dimly appreciated that the $SO_2$-iron oxidative reaction required the presence of free electrons (apparently transferring between ions), it is now realized that it is highly desirable to provide such a "galvanic exchange" condition throughout the whole procedure and particularly in conjunction with (a) turbulence or agitation, and (b) the intimate presence of gaseous oxygen continuing through successive steps until the flocculating ion itself is oxidized. As already noted, the galvanic charge imposed on the particulate matter by the added electrolytes (acid and basic reagents) promotes or accentuates the surface adhesion of gas to particle, and enables the interchange of electrons. Such a reacting state is then maintained, and phase separation prevented, by movement at a tailored flow rate.

Typical surface-adsorbent particulate matter may be either oxidizable or non-oxidizable and includes cellulosic or other organic matter as well as inorganic compounds such as metallic oxides (alumina, magnesium oxide or calcium oxide) and especially compounds of atoms which have a Van der Waals packing radii of about 1.9 or less. Additional examples of particulate matter include infusorial earth, diatomaceous earth, bentonite, and siliceous matter such as free-flowing sand and silicones.

The invention will be described further, by way of example, with reference to the accompanying drawings, in which:—

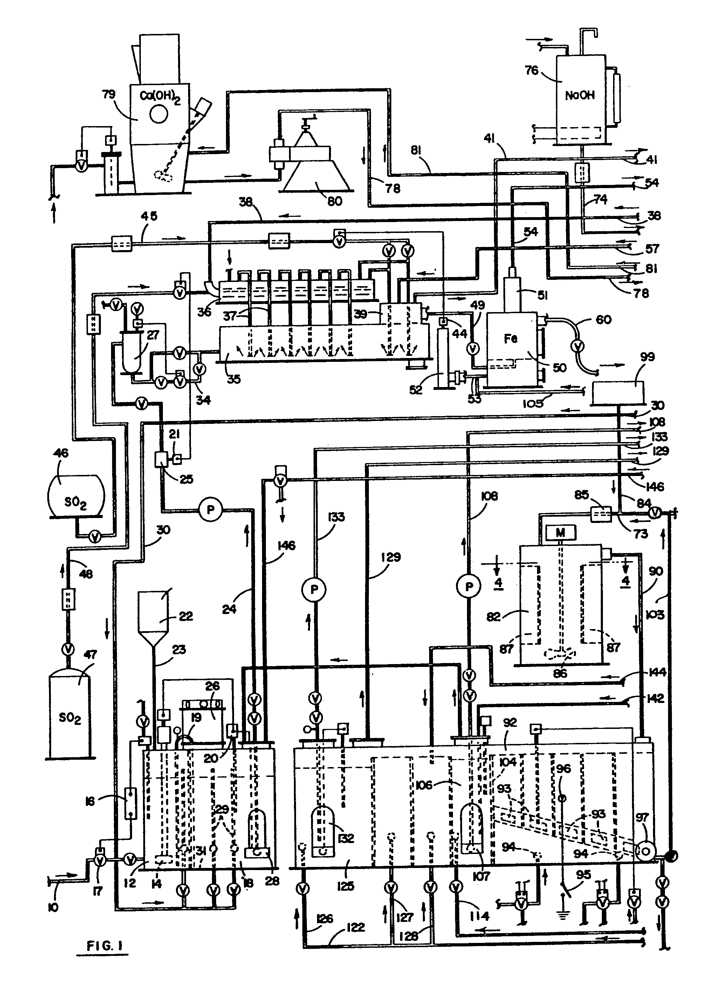

Figures 1, 2, 3 show in semi-schematic representation, a process and apparatus embodying the present invention, with the various flow connections being horizontally alignable when the three sheets are placed side by side in this order.

Figure 4 is a horizontal sectional view taken on line 4—4 through the soda ash treatment unit of Figure 1.

Figure 5 is a vertical sectional view on line 5—5 of the homogenizer tank of Figure 2.

Figure 6 is an enlarged fragmentary detail of an end outlet segment of an air delivery conduit of tanks 70 and 72.

In the illustrated apparatus, a flowable feed stock such as raw sewage is introduced through an inlet conduit 10 into a wet well or fragmentation chamber 12 where a chopper pump 14 reduces the solid matter to the required particle size (30 to 250 $\mu$m). Liquid level in this chamber is regulated by an automatic control unit 16 which opens and closes a pinch valve 17 in the line. From the wet well the particulate dispersion is moved to a primary or marshalling tank 18 through a conduit 19 as regulated by a liquid level control 20. In the absence of any or sufficient solid matter in the feedstock, the required particulate matter, which may be any inert material which will hold a galvanic charge (e.g. shredded cellulose) is added to the wet well from a supply hopper 22 by a conduit 23.

The comminuted feed stock is ultimately withdrawn from the primary tank 18 through conduit 24 at a rate determined by a suction pump 25 and conveyed to a pulsation damper tank 27. A controlled quantity of exhaust gas is released from the top of the primary closed tank 18 through a wet charcoal filter unit 26 and vented (odourless) to the atmosphere. Within the primary tank 18 is a submerged transfer pump 28 which is operated to maintain a continuous flow of fluid and suspended particles. Turbulence within tank 18 is contributed in part by the presence of internal baffles 29 and by continuous bubbles of a (recycled) gas mixture from conduit 30 which enter through perforations in the piping adjacent the flooring 31 of the tank. To the extent that the liquid medium is clear enough, it is visually discernible that small gas bubbles here adhere to the surface of the moving solid particles within the liquid, and their gaseous oxygen content (derived initially from air) plus $SO_2$ pretreats or conditions oxidizable particles for subsequent oxidation. In the case of highly oxidizable matter such as fecal debris, a residence time in the preliminary chamber 18 on the order of about one and a half to about two hours is indicated.

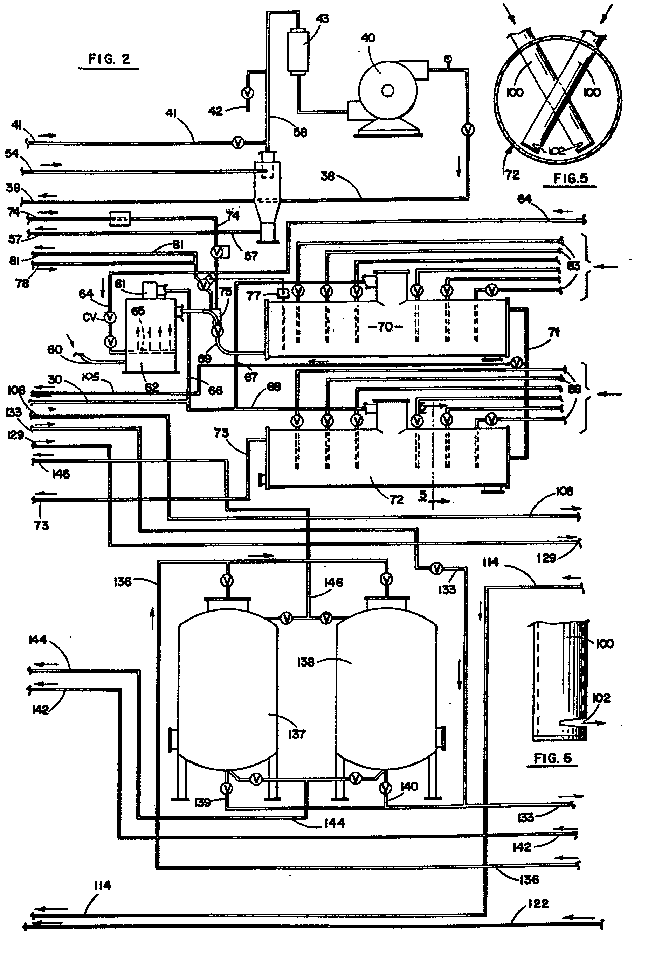

From the pulsation dampener tank 27, the flow, at the rate controlled by mass flow meter 21, is moved through conduit 34 to a mixer tank 35 where it is intermingled with a gaseous mixture of sulfur dioxide and air, introduced by drop lines 37 from an overhead gas mixing chamber 36. Recycled gas is introduced to the mixer chamber 36 through the line 38 coming from a compressor 40 which receives exhaust gas through line 42, passing through a silencer unit 43 (Fig. 2). Both the gas mixer 36 and the flow mixer tank 35 are at times supplied with liquid sulfur dioxide through line 45 from a supply tank 46 (which may be heated), in response to a pH meter 44 which maintains the tank 35 within the pH range of about 2.0 to about 2.5. Alternately or concurrently sulfur dioxide gas is supplied to the gas mixer 36 from supply source 47 through conduit 48, controlled by pH meter 44 and/or the mass flow meter 21. In tank 35, Peclet Numbers will range between 9 and 25. Lehman Reaction Numbers of the blow tubes 37 vary from 3.5 to 8; for eductors 25 to 30.

Exhaust gas from a tower 39 is continuously introduced into an iron reaction chamber 50 as a stream of bubbles through conduit 49, while at the same time the liquid flow containing a controlled amount of free gas bubbles is passed through an outfall conduit 52 and introduced through line 53 into the reaction chamber 50 below the porous bed. It is very important that gas inlet valve 49 be partially closed and thus used to mix its flow with the fluid flowing through the line 53. The gas mixture which is passed jointly through the scrap iron bed (which furnishes both ferrous and ferric ions to the medium) and through the liquid flow stream, should contain a mixture of both nitrogen and oxygen (i.e. air). Vaporous mixture from the stack 51 of the iron chamber is passed through the conduit 54 which separates the non-gaseous components (i.e. liquid droplets) and returns them to the mixer tank 35 of the main flow by way of conduit 57 or into the discharge from tanks 70 or 72 (Fig. 2); the gaseous portion is recycled through the compressor 40 by the line 57.

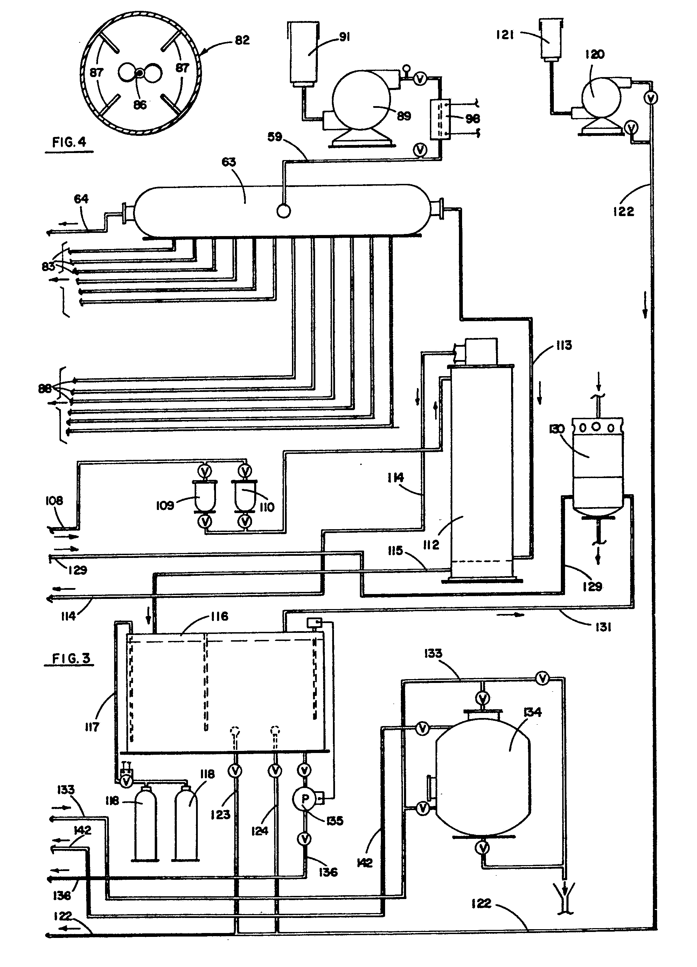

Liquid outflow from the reaction tank 50 has a pH of about 3.0 to about 3.5 and is passed through conduit 60 to a blow tank 62 (Fig. 2) where air from a reservoir 63 (Fig. 3, by conduit 64 and manifold 65 is passed upward through the liquid so as to separate it and to again provide a fluid system saturated with dissolved oxygen. The flow is generally red from ferrous ions. Gaseous take-off from stack 61 by conduit 66, and gases from tanks 70 and 72 by lines 67, 68 are returned by line 30 to primary tank 18. From the blow tank 65, liquid outflow is conveyed to the lower level of the neutralizer tank 70 by conduit 69. A conduit 74 connects a mixing throat 75 of the outflow conduit 69 to a caustic supply tank 76, and a conduit 78 connects a lime slurry source 79 and circulating pump 80 to the mixing throat 75, the alkali flow to the neutralizer 70 being controlled by a pH meter 77. Instead of gradually neutralizing the acidic flow and progressively bringing it to the required alkalinity of about pH 11, it has been found advantageous to introduce through the throat 75 at one time, substantially the whole quantity of alkali required to achieve the final pH for that immediate volume of flow with which it is mixed.

The air reservoir 63 initiates a plurality of air delivery lines 83 to the neutralizer tank 70 and a similar series 88 to the homogenizer tank 72, which individual lines are disposed to emit a bubbling shearing air stream from individual sparger or wedge-aperture nozzles at their distal ends, thus agitating the churning or foaming mass of liquid and charged particles at the same time that they supply oxygen and nitrogen. Consequently, the emerging outflow through conduits 71 and 73 is oxygen-saturated and the adsorbed gas on the particulate surface continues to be reactive. The flow of air through the several lines 83, 88 is controlled by individual (manual) valves or orifice plates so that it can be adjusted to the "step by step" progression of the increasingly viscous flow and thus continually prevent agglomeration and sedimentation. A residence time of 15 to 17 minutes in each tank is typical; total 30 to 40 minutes at 16—27°C.

The air reservoir 63 is supplied by conduit 59 from an air compressor 89 connected to a silencer 91. The compressor processes fresh air and in some instances may pass it through an ozonizer 98, such as the non-sparking, low voltage, AC, face-separated insulated-plate type described in U.S. Patent No. 3,948,774. However, the basic procedure is sufficiently effective in most cases without the additional oxidation provided by ozone.

As seen particularly in Figure 2, 5 and 6 the several air lines 83, 88, each angularly dispose their terminal segment 100 transversely within the tank 70 or 72. It is formed with a closed end 101 and a blow outlet mouth 102 is cut wedge-shaped into the hemi-cylinder which is oriented downward when disposed in the tank at a transverse angle to the longitudinal vertical plane of the chamber. Such positioning of the outlet minimizes the possibility of liquid backflow and consequent solid deposition or encrustation therein. Successive segments 100 are mounted crisscross or at different angles so that their outlet mouths are angularly staggered relative to the longitudinal axis of the tank. Functionally, the flow-aligned tanks 70, 72 can be considered to provide the same continuing and accelerating reaction process in tandem structural units, that is, supporting completion of the neutralization process while keeping in suspension the forming flocculate in the increasingly viscous flowstream so as to restrain phase separation.

When it is desired to maximise removal of hardness components and silica, the outflow conduit 73 from the homogenizer tank 72 receives a soda ash increment from a supply tank 99 through line 84 and then passes through a heating zone or unit 85 where the flow is raised to a temperature of 32° to 49°C before introduction to the treatment tank 82 where it is agitated by a motor driven agitator or marine type impeller 86. Location of four intermediate-length upstanding baffles 87 in the tank enables or directs the liquid suspension to circulate in closed paths of generally vertical ellipses between adjacent baffles.

From the treatment tank 82, a conduit 90 carries the flow to a flocculation chamber 92 which may have inclined walls and/or corrugated floor segments separated by upstanding baffles which form a convoluted pathway for descending sediment and liquid. Individual floor segments are movable by pneumatic actuators 93 driven by air lines 94. Each unit of the apparatus has been electrically insulated from the ground and from successive (adjacent) units, being connected together by plastic conduits, the chambers preferably being formed of non-conductive material (concrete or wood) and in any event lined with corrosion-resistant layer such as plastic or glass fibre.

The flowstream or liquid medium may now be grounded by closing a switch 95 connected to an electrode 96 which is exposed to (i.e. inserted within) the fluid of the chamber 92. Consequent discharge of the galvanic charge carried by the particulate matter (which should now be oxidized to the extent possible), and cessation of agitation and flow, initiates a relatively rapid precipitation of the potentially solid components from the liquid medium. Residence time in the flocculation chamber is on the order of about 30 to about 90 minutes. Distally the sludge, dark red-black from ferric ion, falls into a screw conveyor 97 which passes it through a screen classifier (not shown) and returns the liquid component to the system.

The liquid of the flocculation chamber 92 passes over an air-locked weir 104 into a decanted water tank 106 where a submerged pump 107 moves it through conduit 108 to woven strainer units 109, 110, which remove colloids, and thence to an upper inlet of a packed tower 112 where it percolates down through raschig-like rings countercurrent to a stream of (possibly ozonized) air and is then introduced through the conduit 115 to an aeration tank 116. Air from the top of the tower is conveyed by line 114 to the decanted water tank 106.

Liquid outflow from the tower 112 passes through conduit 115 to aeration tank 116, which latter may be connected by a line 117 to a source of chlorine for optional use in particular circumstances (e.g. when required by local ordinance). A compressor 120 with silencer 121 delivers fresh air through conduit 122 to the aeration tank 116 through lines 123, 124 and to a filtered water tank 125 through lines 126, 127, 128.

A gas take-off line 129 connects the filtered water tank 125 with a charcoal-filter exhaust unit 130. The latter is also connected by gas line 131 to the aeration tank 116. The tank 125 has a submerged pump 132 which moves liquid through conduit 133 to an ultimate polishing or filter tank 134. The aeration tank 116 is connected by pump 135 and liquid conduit 136 to dual or alternate activated-charcoal filter tanks 137, 138, having drain lines 139, 140, which are joined to conduit 144 which terminates in the holding tank 125. A backwash line 142 collects fluid from filter tank 134 and delivers it to the decanted water tank 106. A return line 146 connects the backflush outlets of the two filter tanks 137, 138 to the decanted water tank 106. Pump 132 in tank 125 provides product water or water for backwash through line 133 to filters 137, 138 and to product filter tank 134. A backwash line 146 connects the filter tank to the primary tank 18.

The solids collected in the bottom of the flocculation tank 92 may contain toxins (which have not been detoxified by oxidation). Such can be metals such as mercury, arsenic, boron, lead, iron, gold or silver, as well as some biocides. Non-oxidative pyrolysis may be used to remove organic materials such as petro-chemicals. Precipitates such as carbonates and sulfates are decomposed and removed as carbon dioxide and sulfur dioxide. Nitrogen is removed as an inert gas. The metals may be volatised and recondensed or removed in a carbon matrix and then calcined/roasted in the presence of oxygen to prepare a composite of various metallic oxides. The noble metals are recovered as a combined metal concentrate. The particular procedure for any flowstream will be adapted of course to the specific components shown by analysis to be present and which it is desired to recover.

Flow pattern:

$$N_{Re} = \frac{\text{container diameter } (D) \times \text{velocity of flowing fluid } (V) \times \text{density of fluid media } (p)}{\text{Viscosity of flowing media } (\mu)}$$

For example, the iron reaction chamber 50 has the characteristics:—

| Diameter metres | Liquid velocity- m./sec. | Liquid mass flow-kg/m²/sec. | Air mass kg/m²/sec. | $N_{Re}$ | Mass flow ratio- liquid/air |
|---|---|---|---|---|---|
| 0.46 | 0.004359 | 2.3892 | 0.2849 | 967 | 8.395 |
| 0.61 | 0.003688 | 2.6908 | 0.3119 | 1452 | 8.626 |
| 0.76 | 0.003780 | 3.449 | 0.2848 | 2320 | 12.095 |
| 0.84 | 0.003536 | 3.5263 | 0.2848 | 2613 | 12.381 |
| 0.91 | 0.003597 | 3.5873 | 0.3418 | 2900 | 10.496 |

A critical factor for such sewage or waste water treatment in the presence of particulate matter and sulfite/sulfate ion or hydroxyl ion is defined as Shape Factor

$$(SF) = \frac{\psi\, DA}{HFA}$$

wherein

$\psi$=particulate concentration factor.
DA=nominal air lift Disengaging Area
HFA=waste fluid hydraulic flow area

An operative SF range is from 9.5 to 11.3; optimum 10±0.5.

7

Example:

Municipal sewage with the bulk solids reduced in size to the designated particulate diameter was flowed through a processing assembly such as here illustrated, the initial acidity made pH 1.5 to 2.5 by introduction of liquid and/or gaseous sulfur dioxide. The liquid flow was then moved through the serpentine flow pattern of tank 35 (shape factor 9—10) at $N_{Re}$ of 5000 to 10,000 when in contact with the gaseous flow and 7000 to 18,000 when not in contact with the gaseous flow; the gas mixture of $SO_2$ and air was moved at $N_{Re}$ 400 to 500.

After 7-1/2—15 minutes residence in the iron reaction chamber 50, the flow was passed through the air-blow tank 62 and thence to the neutralizer tank 70 where the pH was increased from 8.5 to 10.0 during a period of 15 minutes; it continued through the homogenizing tank 72 for 15 minutes while the pH increased to a maximum of 11.

When the operation is particularly directed to removal of calcium and magnesium ions ("hardness" components) and also to reduce the concentration of silica, 15—30% of the sludge removed from the screens (subsequent to flocculation) is returned to the homogenizer tank to augment the particulate concentration and increase interfacial surface area, thus:—

|  |  |  |  | In liquid system |
| Type Particulate | Particle size Dia. $\mu m$ | Density mg./cm$^3$ | Amount g./litre | Interfacial surface area, cm$^2$/litre |
| --- | --- | --- | --- | --- |
| Solution born | 30—225 | 192—1500 | 0.3—0.9 | 660—13000 |
| Flocculants | 100—350 | 300—3500 | 0.04—0.3 | 25—4500 |
| Precipitates | 200—700 | 250—500 | 0.07—0.09 | 14—135 |
| Additives & soda ash | 75—250 | 320—1700 | 0.10—16 | 40—4800 |
| Recycle sludge | 30—700 | 192—3500 | 0.01—4.8 | 250—3360 |

Additives of such size include fly ash, carbon black and infusorial earth.

The flow is then moved through an agitation and heating zone 82 at $N_{Re}$ of 30,000 to 40,000 with addition of soda ash. Alternate to use of mechanical propellors, complete agitation with blown air may be achieved when there is 16.0—32.0 CFM/minute/m$^2$ of cross section area.

Finally, the fluid flow is moved at $N_{Re}$ of 2000 to 3700 for 30 to 90 minutes through the flocculation tank or sedimentation zone 92.

In retrospect, the addition of particulate matter by the present process may be distinguished from various incidental additions of particles to liquids in the past in that the latter were (a) for removal of dispersed colloids by adding charged particles in order to agglomerate the two substances, or (b) for removing a solute by addition of a substance which decreases the solubility of one or more of the dissolved components. Neither of these treatments contemplates (or obtains) a continuing reaction (oxidation) between the dispersed particles and a gaseous component adhered to the added particles, and/or the interplay of free electrons in such environment, which electrons take part in the desired continuing reaction. Nor do they contemplate deliberately maintaining such dispersion and preventing agglomeration during a necessary (multi-step) reaction period; nor final precipitation by introduction of a flocculating ion. In brief, the provision and utilization of an insulated flowing body of polar liquid constituting a galvanic or ionic exchange module (cell) the contents of which is continually manipulated both to prevent phase separation (precipitation) and to effect a desired chemical reaction (ultimately resulting in joint liquid purification and separation of solids) seems to have been entirely overlooked or unappreciated. The necessary polar solvent such as water, contrasts with non-polar solvents such as mineral oil, paraffine, kerosene, etc., which are not suitable because of being incapable of transmitting an electric current.

It should be appreciated that the intended and necessary result from applying the dimensionless flow parameters related herein, is that (1) sedimentation and agglomeration are prevented, and (2) at their active surface area, the dispersed particles maintain the intermolecular attraction, often referred to as the Van der Waals effect, which attracts to and causes to adhere thereto clusters of moving air molecules (bubbles). The result is not only the progressive oxidation of the flowing particles, but also subsequently the electrical and interatomic field force which is thus continued, appears responsible for "drawing out" of solution the dissolved electrolytes of both positive and negative charge, such as the halide (chlorine) ions and alkali metal (sodium) ions which finally are separated from the medium as one component of the flocculate.

In addition to the Reynolds Number which relates the fluid density and velocity with the container configuration, the following parameters should be taken into account:—

The heat transfer and energy retaining properties of the flowing fluid are defined by the Peclet Number$=DV \rho$ Cp/k

or

$$\frac{Cp \, S\rho \, R^2}{k+4/3 \, Dp\rho\sigma \, T^3}$$

$C_p$=specific heat;
$\sigma$=surface tension
k=thermal conductivity.

The peclet Number for tanks 70 and 72 is in the range of 12 to 32, and gas escape velocity at the surface is 0.055 to 0.073 m/sec.

The Schmidt Number relates viscosity, density and container diameter (hydraulic diameter in an awkwardly shaped vessel) $N_{sc}=\mu/\rho\, DV$.

The Stanton Number relates the coefficient of heat transfer (h) to the specific heat, velocity and density. $N_{st}=h/C_p V_p$.

The Stanton Number for the liquid flow gas mixing tank 35 is 35.50 to 36.20; for the neutralizer and homogenizer tanks 70, 72 the Stanton Number is 28.60 to 10,160.

The Weber Number relates the shape of the container (length of flow path L), the density, the velocity, and surface tension.

$N_{we}=L\rho\, V^2/\sigma\, g_c$.

Contact Number $N_c=(U^2/\rho^2 g)^{1/3}(N_{Re})^{1/2}(N_{Sc})^{1/2}$

The iron tank 50 has an operable range Schmidt Number $4\times10^{-7}$ to $1.3\times10^{-6}$; the contact number is 228 to 446.

Reaction gases (air, sulfur dioxide, nitrogen or ozone) can be introduced into the stream of particulate-laden fluid by eduction, sparge lines, or blow-shear tube. Each of these operates within a precise Lehman Reaction Number and Weber Number range. The dimensionless Lehman Reaction Number relates the System Shape Factor and the mass flows of fluid and gases.

| System | LRN | Weber |
|---|---|---|
| Eductor system | 25—30 | 1.0—1.7 |
| Sparge Lines | 3.4—4.4 | 0.92—1.98 |
| Blow-Shear Tube | 6.7—7.7 | 0.98—1.85 |

The terminal velocity of spherical and non-spherical droplets of particles settling in the vapour space will vary from 0.122 to 8.14 m/sec. Particles up to 85 microns will be entrained and are removed prior to gas flow to the iron tank 50.

Flow conditions within the heater tank 85 are defined by a Reynolds Number of 30,000 to 40,000 and a Grashof-Prandtl Number product within the range of 25,600 to 230,000 on the water-particulate matter side. The Grashof Number=$(L^3\rho^2 g/\mu)$ (b$\Delta$T) where L equals length of reaction chamber; $\rho$=density; g=9.8 m/sec.$^2$; $\mu$=viscosity; b=coefficient of thermal expansion; T=temperature.

$$\text{The Prendtl Number}=\frac{C_p\mu}{K}$$

where $C_p$ is specific heat; $\mu$ is viscosity; K is thermal conductivity. In removing hardness components, the heater tank is operated at a temperature of 41°C$\pm$2°C, the fluid leaving the tank between 38°C and 44°C. Introduction of additional particulate matter by line 103 into the line 73 (effluent from the homogenizer tank 72) as noted earlier, provides 30% to 85% more surface area in the final stages of magnesium conversion to magnesium carbonate and then to magnesium hydroxide (a solid). Magnesium oxide and magnesium hydroxide also promote silica removal. The reintroduced sludge at this point, composed of mechanically formed particulate matter, flocculants and precipitates, is very effective in assisting the soda ash in final removal of silica and magnesium. The electrical charge on the particulate matter also increases the rapidity and effectiveness of silica removal. Magnesium and calcium chlorides, sulfates and nitrates are converted to solid magnesium hydroxide and calcium carbonate. Since Ca and Mg exist in hard water primarily as chloride, bicarbonate and sulfates, they are removed by the present process.

The way the present system handles hexavalent chromium is of particular interest. As the recirculating gas stream of oxygen, nitrogen and sulfur dioxide contacts the particulate matter and soluble salts, the sulfite ion reacts with any metallic ions present. Hexavalent chromium is reduced to trivalent chromium in about 15 minutes at pH 2.0 to 2.5. As a reductant, the sulfur dioxide consumes oxygen but the latter is continually being replaced. In the iron reaction tank, ferrous sulfate is produced, which also acts as a hexavalent chromium reductant. This insures complete conversion to trivalent chromium. As the latter flows into the neutralization tank (with an initial pH of 8.0 to 8.5) its coupling with hydroxyl ion results in a light and voluminous precipitate which is continually mixed with the ferrous hydroxide that is changing to ferric hydroxide (a heavier precipitate). In a total residence time of 30 minutes in tanks 70 and 72, this reaction goes to completion—the precipitate continuing to be suspended as a result of air drive "churning" which maintains an oxygen-saturated medium—the pH eventually reaching 10.5 to 11. Discharge conduit 73 delivers a finely dispersed, charged particle that agglomerates rapidly in the region of the flucculation/sedimentation zone 92.

Waste water treatment by the present system produced the following:—

| Water prior to treatment | | % reduction of initial concentration found in product water prior to filtration | | Sludge concentrate: spectrographic analysis |
|---|---|---|---|---|
| pH 5.1 | | pH 7.2 | | pH 8.2; sp.gr, 1.094 |
| Al | 430.0 mg/l | 0.5 mg/l | 99.9% | 33.700% by wt. |
| Ca | 616.0 | 536.0 | 13.0 | 1.080 |
| Mg | 145.8 | 53.5 | 63.3 | 3.230 |
| Boron | 105.0 | 16.6 | 84.2 | .190 |
| Cu | | | | .009 |
| Iron | 700.0 | 70.0 | 90.0 | 6.670 |
| Silicon | | | | 1.660 |
| Titanium | | | | .640 |
| Mn | 1.3 | .20 | 84.6 | 1.030 |
| Sodium | 13750. | 1550.0 | 88.7 | 48.230 |
| Potassium | 240. | 14.5 | 94.0 | 2.810 |
| | | | | 99.249% |
| Ammonia | 5.85 | | 96.6 | |
| Total hardness (as Ca Co$_3$) | 2140.0 | 1560.0 | 27.2 | |
| Fluoride | 113.0 | 6.25 | 94.5 | |
| Chloride | 1240 | 152.0 | 87.8 | |
| Sulfate | 32000 | 4050.0 | 87.4 | |
| Phosphate | .2 | .2 | | |
| Total Organic Carbon (TOC) | 16.0 | 18.0 mg/l | | |
| Free Carbon Dioxide (as CO$_2$) | 20.0 | 5.0 | | |
| Total Dissolved Solids | 62338. | 7598. | 87.8 | |
| Total Solids | 69514 | 7652 | 89.0 | |
| Suspended Solids | 7176 | 54.0 | 99.25 | |
| Chemical Oxygen Demand | 765.0 | 38.3 | 95.00 | |
| Volatile Solids | 1599 | 464. | 71. | |
| Dissolved Oxygen | 0 | 4.5 | | |
| Surfactants | 2.0 | .6 | 70. | |
| Turbidity | 18500 JTU units | 35.0 JTU | 99.8 | |
| Specific conductance @ 25 C.45000 micromhos/cm | | 7600 | | 29.100 |

JTU=Jackson Turbidity Unit

The unexpected usefulness of the present (water) treating process in killing and agglomerating viral and other monocellular life forms may be attributed to the cumulative effect or concurrence of a number of individual factors, at least some of which have a unique effect even alone. These factors are:—

(1) The broad band shift from extreme low to extreme high pH (i.e. 1.5 to 11), as well as residence at each end of the spectrum, effects the range of organisms of which individual groups may be resistant to acidic or basic media only, but not to extremes of both pH.

(2) In this connection, the rapidity (e.g. 15 to 30 minutes) as well as the range or strength of the shift of pH appears important. An organism could better acclimate or survive slow or mild change.

(3) Residence time during which the whole medium or environment is undergoing treatment at each end of the flow-process, comprising gaseous inter-change, continued suspension/agitation, oxidation and ion exchange, is significant.

(4) Relative density and composition of particulate matter in the flow-medium, compared to the volume of water being treated is an important parameter. (Total area particles cm$^2$/l.=130 to 13,280.)

(5) The additional effect (attraction to living or newly dead cells) contributed by the galvanic charge which is carried by the particles is effective. In this connection, it is preferred to obtain the initial low adicity (plus galvanic charge) by introduction of sulfur dioxide, rather than by addition of formed acid, since the $SO_2$ produces hydrogen ions and shifting electrons by disassociation of water.

(6) Detergent action results from sulfonation of fat and oil components of the medium and especially from such ingredients which may form part of the viral/bacterium capsule/membrane. Proteinaceous components of the membrane may also conjugate; subsequent salting out of the organic salts then exposes the cell contents to caustic attack or saponification.

(7) Under these critical conditions, lime is particularly effective against some viruses.

(8) Rapidity and completeness of flocculation is important, e.g. 5 to 7 minutes after grounding, in comparison with a minimum of 25 to 35 minutes or more which might be required in "merely" clarifying murky water by flocculating with Al or Fe ions.

(9) The total kill is achieved without recourse to chlorine or other toxic agent, and without need to modify the treatment so as to target it at a specific organism first determined to be present. Such process can be used to "harvest" pestilential life forms for identification and study; by extracting samples from successive process steps, the susceptibility of the cell to each step is learned.

## Claims

1. A process for removing from a polar liquid as a solid substance, a dissolved or suspended contaminant, which contaminant is capable of solid existence at ambient operating temperature and pressure by addition of a heavy metal, which metal is capable of forming a flocculant precipitate in alkaline media and which metal is capable of being oxidized in acidic media, making such liquid alkaline and separating the supernatant liquid from the precipitate, characterised in that said process comprises:

(a) dispersing in said liquid a minimum of 0.1%w. random-moving particulate matter, which may either be added or be formed by comminuting of said contaminant when the latter is initially present in bulk, which dispersed particles thereof have a density of 1.05 to 2.0 and a size of 30 to 225 $\mu$m with free surface energy of $100\times10^{-7}$ to $500\times10^{-7}$ joules/cm$^2$, and also reducing any additional solid matter present to such particle size.

(b) providing an oxidation medium for such of the contaminant and added particles as may be capable of oxidation, by making such liquid acidic, intimately dispersing gaseous oxygen therein, and providing a supply of a heavy metal, which metal is characterised by the capacity of subsequently forming a flocculant precipitate in alkaline media, and by the capacity of being oxidized in situ.

(c) moving the particles at least in part by flowing the liquid and its contents through electrically-insulated and flow-connected reaction vessels in intimate mixture with gaseous oxygen,

(d) making said liquid alkaline, subsequently ceasing agitation and electrically grounding the alkaline liquid, thus yielding an oxygen-containing supernatant pure liquid and a precipitate.

2. A process as claimed in claim 1, in which said oxidation medium of (b) comprises sulfite and sulfurous ions and is made pH of 2 to 2.5, and said heavy metal comprises iron.

3. A process as claimed in claim 1 or 2, in whichthe liquid of (d) is made pH of 10 to 11.

4. A process as claimed in claim 1, 2 or 3, in which said polar liquid is predominantly water.

5. A process as claimed in claim 1 and 3, in which said contaminant comprises hexavalent chromium and in which the liquid of (d) is made pH of 10.5 to 11.0.

6. A process as claimed in claim 1, in which prior to the flocculation of the particles and contaminants, there is reintroduced to said liquid 15% to 30% of flocculated sludge plus soda ash, and the resultant mixture is heated at 38°C to 44°C with agitation, and then flocculated as recited in (d), thereby increasing the removal of silica, magnesium and calcium from the liquid.

7. A process as claimed in claim 6, in which the heated liquid flow is moved through vessels and their connecting conduits with a Reynolds Number of 30,000 to 40,000 and a Grashof-Prandtl Number product of 25,600 to 230,000.

8. A process as claimed in claim 1 or 2, in which:—

(i) said oxidation medium of "b" is moved through a zone with a Reynolds Number of 967 to 2900, a Shape Factor of 9.5 to 11.3, a Schmidt Number of $4\times10^{-7}$ to $1.3\times10^{-6}$, and a Contact Number of 228 to 446;

(ii) said polar liquid is moved through a zone wherein the gas is mixed therewith in accordance with a Peclet Number of 9 to 25, a Shape Factor of 9 to 10, a Reynolds Number of 400 to 500 for gas flow, 5000 to 10,000 with gas contact and 7000 to 18,000 without gas contact, a Lehman Reaction Number of 3.5 to 8 for blow tubes carrying gas into said zone, and a Stanton Number of 35.50 to 36.20;

(iii) the alkalation of "d" is effected in a zone of liquid flow which is agitated by air moved countercurrent therethrough, said liquid being moved at a Peclet Number of 12 to 32 and the air being introduced therein by sparge lines having a Lehman Reaction Number of 3.4 to 4.4 or by blow shear tubes having a Lehman Reaction Number of 6.7 to 7.7 and a Stanton Number of 28.60 to 10,160;

(iv) the flocculation and precipitation of "d" is effected in a zone wherein the flow is moved at a Reynolds Number of 2000 to 3700.

9. A process as claimed in claim 1, in which said contaminant is (i) a sewage/refuse, (ii) an inorganic salt, preferably sodium-chloride, or hexavalent chromium salts, or (iii) fecal matter.

10. An assembly for purification of contaminated liquid by successive acidic and alkaline treatment of said liquid in the presence of an oxidising agent dispersed therein and in the presence of a heavy metal which is capable of forming a flocculant precipitate in alkaline media and of being oxidized in acidic media, said assembly including liquid flow control means, characterised in the following sequentially connected units;

(a) liquid container means including associated means for selectively macerating solid components of a thus-contaminated liquid, and gas delivery/aeration means for passing gas into intimate admixture with said contaminated liquid and macerated components,

(b) acidic treatment means, flow connected to said container means, and including means for regulation of pH by selective introduction of acidic and gaseous oxidizing reagents to the contaminated liquid,

(c) container and reactant means, flow connected to said last treatment means, and comprising a source of soluble heavy metal ions adapted to mingle with the liquid flow stream, and means for subsequently aerating the liquid flow by passing gaseous oxygen therethrough;

(d) neutralization means, flow connected to said last aerating means for introducing alkaline reagent into the liquid flow, and a plurality of successively distal means for intimately mixing gaseous oxygen into the alkaline flow stream in amount adapted to restrain precipitation of contaminants by agitation thereof;

(e) means for flocculating separable contaminant components of the alkaline flow stream, substantially concurrent with electrical grounding of said stream, and switch means for electrically grounding said alkaline flow stream, each of said units starting with (b) being electrically insulated from ground support, and said flocculating means (e) being electrically insulated from the preceding flow connected unit.

11. An assembly as claimed in claim 10, which includes between units (d) and (e), means for simultaneously heating and agitating the alkaline flow stream while continually restraining precipitation.

12. An assembly as claimed in claim 11, in which unit (d) comprises an elongated chamber and said oxygen mixing means which is located distal to the alkaline introducing means, comprises successive downstream gas delivery conduits individually having ejection nozzles transversely disposed within the flow stream at successive staggered angular displacement from the longitudinal axis of the chamber, which conduits have individual flow control means whereby the gas inflow therethrough may be adjusted to changing turbidity of the flow stream immediately adjacent each nozzle.

## Patentansprüche

1. Verfahren zur Entfernung eines als festen Stoff vorliegenden, gelösten oder schwebenden Schmutzstoffes aus einer polaren Flüssigkeit, wobei der Schmutzstoff fähig ist, bei einer Behandlung unter Umgebungstemperatur und -druck durch Zugabe eines Schwermetalles als Festkörper zu existieren und das Schwermetall fähig ist, einen flockigen Niederschlag in alkalischen Medien zu bilden und das Metall fähig ist, in sauren Medien oxidiert zu werden, wodurch die Flüssigkeit alkalisch gemacht wird und die obenschwimmende Flüssigkeit vom Niederschlag getrennt wird, dadurch gekennzeichnet, dass das Verfahren enthält:—

(a) das Dispergieren in der Flüssigkeit eines Minimums von 0,1 Gew.% willkürlich sich bewegender Stoffteilchen, die entweder hinzugefügt oder durch Zerkleinerung des Schmutzstoffes gebildet werden, falls dieser von Anfang an in der Hauptmasse vorhanden war, wobei die zerstreuten Teilchen eine Dichte von 1,05 bis 2,0 und eine Grösse von 30 bis 225 $\mu$m mit einer freien Oberflächenenergie von $100 \times 10^{-7}$ bis $500 \times 10^{-7}$ Joules/cm$^2$, und auch das Reduzieren aller zusätzlichen anwesenden festen Stoffe auf diese Partikelgrösse,

(b) das Vorsehen eines oxydierenden Mediums für diejenigen der Schmutzstoff- und suzätzlichen Partikel, die oxydiert werden können, durch Sauermachen dieser Flüssigkeit, innig Mischen von gasförmigen Sauerstoff darin und Vorsehen einer Menge eines Schwermetalls, wobei dieses Metall gekennzeichnet ist durch die Fähigkeit, anschiessend in einem Alkalischen Medium einen flockigen Niederschlag zu bilden und durch die Fähigkeit, auf der Stelle oxydiert zu werden,

(c) das Bewegen der Partikel mindestens teilweise durch Durchströmen der Flüssigkeit und ihres inhaltes durch elektrisch isolierende und kommunizierende Reaktionsgefässe in inneger Mischung mit gasförmigem Sauerstoff,

(d) Alkalischmachen dieser Flüssigkeit, anschliessend mit Schütteln aufhören und elektrisch die alkalische Flüssigkeit erden, um eine Sauerstoff enthaltende obenschwimmende reine Flüssigkeit und einen Niederschlag zu ergeben.

2. Verfahren nach Anspruch 1, in welchem das Oxydations-medium von (b) Sulfit und schweflige Ionen enthält und auf einen pH-Wert von 2 bis 2,5 gebracht wird und das Schwermetall Eisen enthält.

3. Verfahren nach Anspruch 1 oder 2, in welchem die Flüssigkeit von (d) auf einen pH-Wert von 10 bis 11 gebracht wird.

# 0 007 325

4. Verfahren nach einem der Ansprüche 1 bis 3, in welchem die polare Flüssigkeit vorwiegend Wasser ist.

5. Verfahren nach den Ansprüchen 1 und 3, in welchem der Schmutzstoff hexavalentes Chrom enthält und in welchem die Flüssigkeit von (d) auf einen pH-Wert von 10,5 bis 11 gebracht wird.

6. Verfahren nach Anspruch 1, in welchem vor der Ausflockung der Partikel und des Schmutzstoffes der Flüssigkeit 15% bis 30% ausgeflockten Schlamm und wasserfreies Soda wiedereingegeben werden und die entstandene Mischung unter Schütteln auf 38°C bis 44°C erhitzt und gemäss (d) ausgeflockt wird, wodurch das Entfernen von Silizium, Magnesium und Kalzium aus der Flüssigkeit gesteigert wird.

7. Verfahren nach Anspruch 6, in welchem der erhitzte Flüssigkeitsfluss durch Gefässe und ihren Verbindungen mit einer Reynoldsschen Zahl von 30,000 bis 40,000 und einem Grashof-Prandtl Nummernprodukt von 25,600 bis 230,000 bewegt wird.

8. Verfahren nach Anspruch 1 oder 2, in welchem

(i) das Oxydationsmedium von "b" durch eine Zone mit einer Reynoldsschen Zahl von 967 bis 2900, einem Formungsfaktor von 9,5 bis 11,3 einer Schmidt Zahl von $4\times10^{-7}$ bis $1,3\times10^{-6}$ und einer Kontaktzahl von 228 bis 446 bewegt wird;

(ii) die polare Flüssigkeit durch eine Zone bewegt wird, in welcher Gas hinzugemischt wird in Uebereinstimmung mit einer Peclet Zahl von 9 bis 25, einem Formungsfaktor von 9 bis 10, einer Reynoldsschen Zahl von 400 bis 500 für den Gasfluss, 5,000 bis 10,000 mit Gaskontakt und 7,000 bis 18,000 ohne Gaskontakt, einer Lehman Reaktionszahl von 3,5 bis 8 für Einblasrohre, die das Gas in diese Zone bringen, und einer Stanton Zahl von 35,50 bis 36,20;

(iii) das Alkalischmachen von "d" in einer Flusszone durchgeführt wird, die durch im Gegenstrom hindurchbewegte Luft bewegt wird, wobei die Flüssigkeit mit einer Peclet Zahl von 12 bis 32 bewegt wird und die Luft mittels Sprinklerlinien mit einer Lehman Reaktionszahl von 3,4 bis 4,4 oder durch Einblasscherrohre mit einer Lehman Reaktionszahl von 6,7 bis 7,7 und einer Stanton Zahl von 28,60 bis 10,160 eingegeben wird;

(iv) die Ausflockung und Fällung von "d" in einer Zone durchgeführt wird, in der die Flussmenge mit einer Reynoldsschen Zahl von 2,000 bis 3,700 bewegt wird.

9. Verfahren nach Anspruch 1, in welchem der Schmutzstoff (i) ein Abwasser/Kehricht, (ii) ein anorganisches Salz, vorzugsweise Natrium-Chlorid oder hexavalente Chromsalze, oder (iii) Fäkalien ist.

10. Vorrichtung für die Reinigung einer verschmutzten Flüssigkeit durch eine aufeinanderfolgende saure und alkalische Behandlung der Flüssigkeit in Gegenwart eines oxydierenden, darin verteilten Mittels und in Gegenwart eines Schwermetalls, das fähig ist, in alkalischen Medien einen flockigen Niederschlag zu bilden und in sauren Medien oxydiert zu werden, wobei diese Vorrichtung Mittel zur Steuerung des Flüssigkeitsflusses aufweist, gekennzeichnet durch die folgenden, sequentiell miteinander verbundenen Einheiten

(a) Behälter für die Flüssigkeit bildende Mittel mit zugehörigen Mitteln, um gezielt Feststoffkomponenten einer damit verschmutzten Flüssigkeit aufzuschliessen und Gaszulieferungs- und Belüftungsmittel, um Gas in innige Mischung mit der verschmutzten und aufgeschlossenen Flüssigkeit zu bringen,

(b) mit den Behältern strömungsverbundene Mittel für die Säurebehandlung und Mittel zur Einstellung des pH-Wertes durch gezielte Beigabe von sauren und gasförmigen oxydierenden Reagenzien zu der verschmutzten Flüssigkeit,

(c) mit den obenerwähnten Behandlungsmitteln strömungsverbundene Behälter und Reaktionsmittel mit einer Quelle von löslichen Schwermetallionen, die fähig sind, sich mit dem Flüssigkeitsstrom zu vermengen und Mittel, um anschliessend den Flüssigkeitsstrom durch Durchführen von gasförmigen Sauerstoff zu lüften,

(d) mit der Entlüftungseinheit strömungsverbundene Neutralisationsmittel, um alkalische Reagenzien in die Flüssigkeit einzubringen und eine Vielzahl von distalen Mitteln, um gasförmigen Sauerstoff innig mit dem alkalischen Flüssigkeitstrom zu vermischen in einer Menge, die angepast ist, einen Niederschlag des Schmutzstoffes durch Schütteln zu verhindern,

(e) Mittel, um trennbare Schmutzstoffkomponenten aus dem alkalischen Flüssigkeitsstrom auszuflocken, im wesentlichen zusammenfallend mit dem elektrischen Erden des Stromes, und Schaltmittel, um den alkalischen Flüssigkeitsstrom elektrisch zu erden, wobei jede Einheit von (b) an von der geerdeten Unterlage elektrisch isoliert ist und die Ausflockungsmittel (e) von der vorgehenden strömungsverbundenen Einheit elektrisch isoliert sind.

11. Vorrichtung nach Anspruch 10, die zwischen den Einheiten (d) und (e) Mittel für das gleichzeitige Heizen und Schütteln des alkalischen Flüssigkeitsstromes aufweist, während ein Niederschlag dauernd verhindert wird.

12. Vorrichtung nach Anspruch 11, in welcher die Einheit eine längliche Kammer und Sauerstoffmischmittel, die von den Alkali-Einlassmitteln entfernt sind, und aufeinanderfolgende, stromabwärtsgelegene Gaszufuhrleitungen aufweist, wovon jede quer zum Strom angeordnete Austrittsdüsen aufweisen mit bezüglich der Längsachse der Kammer sukzessive im Zickzack versetzten Winkeln, wobei die Zuleitungen unabhängige Flusssteuermittel aufweisen, wodurch der hineingelangende Gasstrom in unmittelbarer Nähe jeder Düse auf die Trübung des Flüssigkeitsstromes eingestellt werden kann.

13

# 0 007 325

**Revendications**

1. Une méthode pour enlever d'un liquide polaire, un contaminant sous forme de substance solide dissout ou en suspension, ce contaminant étant capable d'exister sous forme solide à une température et une pression de traitement ambiente par l'addition d'un métal lourd, ce métal étant capable de former un précipité floconneux dans un milieu alcalin, ledit métal étant capable d'être oxydé dans un milieu acide, ledit liquide étant rendu alcalin et le liquide surnageant étant séparé du précipité, caractérisé en ce que ladite méthode comprend:

(a) la dispersion dans ledit liquide d'un minimum de 0,1% en poids de matière particulaire mobile arbitrairement, qui peut être ou ajoutée ou formée par comminution dudit contaminant si ce dernier est initialement présent dans la charge, lesdites particules dispersées ayant une densité de 1,05 à 2,0 et une grandeur de 30 à 225 um avec une énergie de surface libre de $100 \times 10^{-7}$ à $500 \times 10^{-7}$ joules/cm², et aussi la réduction de toute matière solide additionelle à cette grandeur de particule,

(b) prévoir un milieu d'oxydation pour celles des particules du contaminant ou des particules additionnées qui sont suceptibles d'être oxydées, en rendant ledit liquide acide, disperser intimement de l'oxygène gazeux dans celui-ci et prévoir l'apport d'un métal lourd, ce métal étant caractérisé par la capacité de former plus tard une précipité floconneux dans un milieu alcalin et par la capacité d'être oxydé sur place,

(c) mettre en mouvement au moins partiellement les particules en faisant passer le liquide et son contenu à travers des vaisseaux de réaction isolés électriquement et en communication entre eux, en mélange intime acec de l'oxygène gazeux,

(d) rendre ledit liquide alcalin, puis arrêter l'agitation et mettre à la terre électriquement le liquide alcalin, pour produire un liquide pur surnageant contenant de l'oxygène, et un précipité.

2. Une méthode telle que revendiquée en revendication 1, dans laquelle ledit milieu d'oxydation de (b) comprend du sulfite et des ions sulfureux, la valeur du pH étant comprise entre 2 et 2,5, et ledit métal lourd comprenant du fer.

3. Une méthode telle que revendiquée en revendication 1 ou 2, dans laquelle le liquide de (d) est porté à une valeur de pH comprise entre 10 et 11.

4. Une méthode telle que revendiquée en revendication 1, 2 ou 3, dans laquelle ledit liquide polaire est en majorité de l'eau.

5. Une méthode telle que revendiquée dans les revendications 1 et 3, dans laquelle ledit contaminant comprend du chrome héxavalent et dans laquelle le liquide de (d) est porté à une valeur de pH comprise entre 10,5 et 11,0.

6. Une méthode telle que revendiquée en revendication 1,

dans laquelle avant la floculation des particules et des contaminant, 15% à 30% de boue floculée et du carbonate neutre de sodium est réintroduit dans ledit liquide, et le mélange résultant est chauffé entre 38°C et 44°C sous agitation, et floculé ensuite comme indiqué sous (d), ce qui favorise l'enlèvement de silice, magnésium et calcium du liquide.

7. Une méthode telle que revendiquée en revendication 6, dans laquelle le flux de liquide chauffé est déplacé à travers des vaissaux et leurs conduites de connexion avec un nombre de Reynolds de 30,000 à 40,000 et un produit de nombre Grashof-Prandtl de 25,600 à 230,000.

8. Une méthode telle que revendiquée en revendication 1 ou 2, dans laquelle:

(i) ledit milieu d'oxydation de "b" est déplacé à travers une zone avec un nombre de Reynolds de 967 à 2900, un facteur de forme de 9,5 à 11,3, un nombre de Schmidt de $4 \times 10^{-7}$ à $1,3 \times 10^{-6}$ et un nombre de contact de 228 à 446;

(ii) ledit liquide polaire est déplacé à travers une zone dans laquelle le gaz est mélangé avec ledit liquide selon un nombre de Peclet de 9 à 25, un facteur de forme de 9 à 10, un nombre de Reynolds de 400 à 500 pour le flux de gaz, de 5,000 à 10,000 avec contact de gaz et de 7,000 à 18,000 sans contact de gaz, un nombre de Lehman de réaction de 3,5 à 8 pour des tubes d'injection amenant le gaz dans ladite zone, et un nombre de Stanton de 35,50 à 36,20;

(iii) l'alcalisation de "d" est effectuée dans une zone de flux de liquide qui est agité par de l'air traversant celui-ci à contre-courant, ledit liquide étant déplacé à un nombre de Peclet de 12 à 32 et l'air étant introduit dans celuici par des lignes d'aspersion ayant un nombre de Lehman de réaction de 3,4 à 4,4 ou par des tubes d'injection à cisaillement ayant un nombre de Lehman de réaction de 6,7 à 7,7 et un nombre de Stanton de 28,60 à 10,160;

(iv) la floculation et précipitation de "d" est effectuée dans une zone dans laquelle le flux est déplacé à un nombre de Reynolds de 2,000 à 3,700.

9. Une méthode telle que revendiquée en revendication 1, dans laquelle ledit contaminant est (i) de l'eau d'égout/des ordures, (ii) un sel inorganique, de préference du chlorure de sodium ou des sels de chrome hexavalent ou (iii) de la matière fécale.

10. Un dispositif pour la purification d'un liquide contaminé par un traitement successif acide et alcalin dudit liquide en présence d'un agent oxydant dispersé dans celui-ci et en présence d'un métal lourd qui est capable de former un précipité floconneux dans un milieu alcalin et d'être oxydé dans un milieu acide, le dispositif comprenant des moyens de contrôle du flux de liquide, caractérisé par les unités suivantes connectées sequentiellement;

(a) des moyens de récipient de liquide comprenant des moyens associés pour macérer

14

selectivement des composants solides du liquide contaminé par ceux-ci, et des moyens pour délivrer du gaz/d'aération pour faire passer du gaz dans un mélange intime avec ledit liquide contaminé et lesdits composants macérés,

(b) des moyens de traitement acide connectés auxdits moyens de récipient de façon à permettre un écoulement et comportant des moyens pour le réglage de la valeur du pH par l'introduction sélective de réactifs acides et d'oxydation gazeux au liquide contaminé,

(c) des moyend de réaction et de récipient connectés auxdits derniers moyens de traitement de façon à permettre un écoulement et comprenant une source d'ions d'un métal lourd soluble susceptible d'être mélangé avec le flux de liquide, et des moyens pour ensuite aérer le flux de liquide en faisant passer d l'oxygène gazeux à travers celui-ci;

(d) des moyens de neutralisation connectés auxdits derniers moyens d'aération de manière à permettre un écoulement pour introduire un réactif alcalin dans le flux de liquide, et plusieurs moyens distants et successifs pour mélanger intimement de l'oxygène gazeux dans le flux alcalin dans une quantité susceptible d'empêcher la précipitation des contaminants par agitation de celui-ci;

(e) des moyens pour la floculation des composants séparables des contaminations de l'écoulement alcalin concourant substantiellement avec la mise à terre électrique dudit écoulement, et des moyens interrupteurs électriques pour la mise à terre électrique dudit écoulement alcalin, chacune desdites unités à partir de (b) étant isolée électriquement du support de mise à la terre, et lesdits moyens de floculation (e) étant isolés électriquement de l'unité précédante connectée dans l'écoulement.

11. Un dispositif tel que revendiqué en revendication 10, comportant entre les unités (d) et (e) des moyens pour simultanément chauffer et agiter l'écoulement alcalin tout en empêchant continuellement une précipitation.

12. Un dispositif tel que revendiqué en revendication 11, dans lequel l'unité (d) comprend une chambre allongée lesdits moyens pour mélanger l'oxygène qui sont disposés à distance des moyens pour introduire l'alcali, comprenant successivement en aval des conduites pour délivrer du gaz ayant des buses d'éjection individuelles disposées transversalement dans le flux et déplacées angulairement et successivement décalées en zig-zag par rapport à l'axe longitudinal de la chambre, ces tuyaux ayant des moyens de commande du flux individuel à l'aide desquels l'arrivée de gaz par ceux-ci peut être adaptée à une turbidité variable du flux à proximité immédiate de chaque buse.

0 007 325

FIG. 1

FIG. 2

FIG. 5

FIG. 6

FIG. 4

FIG. 3

0 007 325

3